# EUROPEAN PATENT SPECIFICATION

(11) **EP 4 465 074 B1**
(45) Date of publication and mention of the grant of the patent: **25.03.2026**
(21) Application number: 23173725.5
(22) Date of filing: 16.05.2023
(51) Int. Cl.: G01S 7/40, G01S 13/42, G01S 13/931, G01S 7/03

(54) **METHOD FOR DETERMINING A DIRECTION-OF-ARRIVAL FOR RADAR WAVES IMPACTED BY VEHICLE COMPONENTS**
VERFAHREN ZUR BESTIMMUNG EINER EINFALLSRICHTUNG FÜR VON FAHRZEUGTEILEN BEEINFLUSSTE RADARWELLEN
PROCÉDÉ DE DÉTERMINATION D'UNE DIRECTION D'ARRIVÉE POUR DES ONDES RADAR IMPACTÉES PAR DES COMPOSANTS DE VÉHICULES

(43) Date of publication of application: 20.11.2024
(73) Proprietor: Aptiv Technologies AG, 8200 Schaffhausen (CH)
(72) Inventor: Stefer, Markus, 42897 Remscheid (DE); Kalli, Sashi Praveen, 42277 Wuppertal (DE); Ioffe, Alexander, 53229 Bonn (DE); Iurgel, Uri, 42369 Wuppertal (DE); Doerr, Wolfgang, 51674 Wiehl (DE)
(74) Representative: Manitz Finsterwald Patent- und Rechtsanwaltspartnerschaft mbB

(56) References cited:
- US-A1- 2018 156 909

## Description

### FIELD

The present disclosure relates to a method for determining a direction-of-arrival for radar waves which are transmitted by a radar sensor mounted at a vehicle and which are reflected at an object in the external environment of the vehicle and received by the radar sensor.

### BACKGROUND

Driver assistance systems and autonomous driving rely on a reliable perception of the external environment of a vehicle. If objects in the environment of the vehicle are detected, angles of these objects with respect to a vehicle, i.e. azimuth and elevation angles with respect to a longitudinal axis of the vehicle, are often important parameters for a proper performance of assistant systems. For autonomous driving, a reliable and precise angle determination is even essential.

For determining such an angle of an object with respect to the vehicle, radar sensors mounted at the vehicle may be used. The radar sensors transmit radar waves which are reflected by the object in the external environment of the vehicle and which are received again by the radar sensor in order to determine a direction-of-arrival for the radar waves which represents the angle of the reflecting object with respect to the vehicle, e.g. with respect to a longitudinal axis of the vehicle. The process of determining the direction-of-arrival for the radar waves is also referred to as angle finding.

If the radar sensor is mounted at the vehicle, it is usually disposed behind further components of the vehicle, e.g. behind a facia and/or a bumper of the vehicle. As a consequence, the radar waves transmitted by the radar sensor may at least partly be reflected by the vehicle component behind which the radar sensor is mounted. Due to this, the process of determining the direction-of-arrival for the radar waves, i.e. the angle finding for the object, may be disturbed by the vehicle component. That is, an increased angle error or even an angle jump may be observed in the process of angle finding for the object.

So far, guidelines are available only e.g. for the integration of vehicle components like a fascia such that the impact of this component on the performance of the radar sensor may be mitigated, i.e. regarding gain loss and angle error. However, a direct inclusion of the impact of vehicle components like a fascia into the process of angle finding is missing in the known procedures.

US 2018/0156909 A1 discloses a computer implemented method comprising the features according to the preamble of claim 1.

Accordingly, there is a need to provide a method for accurately determining an angle of a target object with respect to a vehicle by applying a radar sensor which is mounted behind a component of the vehicle.

### SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for determining a direction-of-arrival for radar waves which are transmitted by a radar sensor mounted at a vehicle. The radar waves are reflected at an object in the external environment of the vehicle and received by the radar sensor, and a vehicle component is mounted in an instrumental field of view of the radar sensor. According to the method, the following steps are performed by a processing unit. An impact of the vehicle component on the radar waves received by the radar sensor is estimated, and the result of the estimating step is stored in a memory being available during operation of the vehicle. During operation of the vehicle, primary data is received which is generated by radar waves being received by the radar sensor. The primary data is modified by the stored result of the estimating step, and the direction-of-arrival is determined by using the modified data.

Generally, the method according to the disclosure considers the influence of a vehicle component, e.g. a fascia, on the radar waves which are received by the radar sensor. A correction means representing the influence of the vehicle component is estimated, and the correction means may be stored in a memory of the vehicle before the vehicle starts operation.

The estimation of this correction means may be performed based on geometrical prerequisites with respect to the radar sensor and the vehicle component, i.e. by taking their position within the vehicle into account, and based on properties of the radar sensor and the vehicle component, e.g. regarding emission patterns of the radar waves and regarding dimensions and material properties of the vehicle component. Additionally or alternatively, an external measurement may be performed in which the radar sensor and the vehicle component are involved only, i.e. outside the vehicle, such that the influence of the vehicle component on the radar waves transmitted by the radar sensor is considered separately. The result of such a measurement may provide the basis for the correction means.

Modifying the primary data received by the radar sensor during operation of the vehicle may be performed by a correlation, e.g. of a beam vector generated based on the stored results of estimating the influence of the vehicle component on the radar waves. Such a beam vector generated based on the estimating step may be regarded as the correction means for a correlation with a beam vector generated based on the primary data received during operation of the vehicle.

Due to the involvement of the influence of the vehicle component on the radar waves transmitted by the radar sensor when determining the direction-of-arrival for the reflected radar waves, an angle error may be reduced for the process of angle finding or determining the direction-of-arrival. In addition, angle jumps can be generally avoided. Conversely, more flexibility in entire tolerances may be provided for installing the vehicle component and the radar sensor close to each other within the vehicle due to the reduction of the angle error and the avoidance of angle jumps. In summary, the angle finding performance is improved by the method according to the disclosure.

Furthermore, estimating the impact of the vehicle component includes: receiving positioning data for the radar sensor and for the vehicle component with respect to a reference position at the vehicle, receiving characteristic data of the vehicle component, and simulating the impact of the vehicle component based on the positioning data and based on the characteristic data. The characteristic data of the vehicle component may at least partly include data related to a material composition of the vehicle component.

That is, the impact of the vehicle component on the radar waves reflected by an object are simulated based on realistic prerequisites related to the installation of the radar sensor e.g. behind the vehicle component, wherein the prerequisites are provided by the positioning data and the characteristic data. The impact of the vehicle component may be simulated by considering the emission pattern of the radar waves generated by the radar sensor and by standard procedures available in the field of radar technology. By this means, a process of angle finding or determining the direction-of-arrival for the radar waves is supported with relatively low effort by the simulation result which may be determined separately before the operation of the vehicle.

According to an unclaimed example, estimating the impact of the vehicle component may alternatively include: receiving positioning data for the radar sensor and for the vehicle component with respect to a reference position at the vehicle, disposing the radar sensor outside the vehicle relative to a simulation component having almost the same dimensions and at least similar material properties as the vehicle component, receiving simulation data which is generated by radar waves transmitted by the radar sensor and reflected by the simulation component, and estimating the impact of the vehicle component based on the simulation data. In the present context, the terms "almost the same dimensions" and "at least similar material properties" are to be understood such that the relative deviation between the vehicle and simulation components with respect to their dimensions and material properties, e.g. regarding their dielectric or other properties relevant for radar waves, is small or even negligible in comparison to the relative error of the results provided by the radar sensor, e.g. regarding range, range rate and standard angle finding.

Hence, an external simulation may be performed outside the vehicle based on realistic prerequisites which may be provided by the positioning data and by the simulation component which may be as similar as possible to the vehicle component being installed in the vehicle together with the radar sensor. Such an external simulation may provide more reliable results for the impact of the vehicle component than a purely theoretical simulation. Alternatively, the purely theoretical simulation may be used together with the estimation of the impact of the vehicle component based on measured data outside the vehicle in order to further improve the estimation of the impact of the vehicle component as a correction means for the angle finding.

According to an embodiment, the result of the estimating step may be represented as a reference beam vector, and a measured beam vector may be generated based on the primary data. Modifying the primary data in order to determine the direction-of-arrival based on these modified data may include correlating the measured beam vector and the reference beam vector.

Generating the beam vectors may generally include a Fourier transform of primary or raw data provided by the radar sensor or based on data received from the estimating step. From the result of such a Fourier transform, the respective beam vector may be derived. For correlating the beam vectors, standard procedures may be used which may also be based on a Fourier transform. Modifying the primary data via the correlation of the beam vectors may be therefore be a correction means requiring a low computational effort.

Determining the direction-of-arrival by using the modified data may include determining a maximum of the correlation of the measured beam vector and the reference beam vector. The maximum of the correlation may refer to the maximum of the absolute value of the correlation result which may be provided as complex numbers. The maximum of the correlation may replace a "raw" direction-of-arrival which would be determined by the primary data only without considering the impact of the vehicle component. Hence, the maximum of the correlation provides the correction means for the direction-of-arrival.

According to a further embodiment, a fractional bin estimation may be applied to the correlation of the measured beam vector and the reference beam vector. The fractional bin estimation may refine the process of angle finding or determining the direction-of-arrival. The fractional bin estimation may be performed based on a fractional Fourier transform which is a modified or generalized Fourier transform including a generalized transformation kernel for the Fourier integral. In other words, such an approach including a fractional bin estimation may be regarded as a discrete Fourier transform being specific for the vehicle component.

Moreover, the result of the estimating step may be stored in a memory of the radar sensor. Hence, the correction means for the primary data received by the radar sensor may be directly available and provided together with a radar sensor when the radar sensor is installed in the vehicle. This may reduce the effort for applying the correction means.

The result of the estimating step may be represented by at least one look-up table. Such a look-up table may require a low computational effort e.g. regarding memory and handling.

According to a further embodiment, an online calibration of the radar sensor may be performed during operation of the vehicle, and the stored result of the estimating step may be updated based on the online calibration. Since the geometrical framework or conditions may be slightly different for the real installation of the radar sensor and the vehicle component within the vehicle on one hand and for the simulation or estimating step on the other hand, the online calibration of the radar sensor may provide a refinement for the process of angle finding or determining the direction-of-arrival if the correction means provided by the estimating step is updated based on the online calibration. In addition, the geometrical framework and the performance of the radar sensor may change over time which may be taken into account and corrected based on the online calibration.

The vehicle component may be a fascia mounted close to a bumper of the vehicle in front of the radar sensor.

In another aspect, the present disclosure is directed at a computer system, said computer system being configured to carry out several or all steps of the computer implemented method described herein.

The computer system may comprise a processing unit, at least one memory unit and at least one non-transitory data storage. The non-transitory data storage and/or the memory unit may comprise a computer program for instructing the computer to perform several or all steps or aspects of the computer implemented method described herein.

As used herein, term like processing unit and module may refer to, be part of, or include an Application Specific Integrated Circuit (ASIC), an electronic circuit, a combinational logic circuit, a field programmable gate array (FPGA), a processor (shared, dedicated, or group) that executes code, other suitable components that provide the described functionality, or a combination of some or all of the above, such as in a system-on-chip. The processing unit may include memory (shared, dedicated, or group) that stores code executed by the processor.

In another aspect, the present disclosure is directed at a vehicle including a radar sensor and the computer system described herein.

According to an embodiment, the radar sensor of the vehicle may include a memory in which the result of the estimating step may be stored.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM); a flash memory; or the like. Furthermore, the computer readable medium may be configured as a data storage that is accessible via a data connection, such as an inter-net connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1: a vehicle including a radar sensor which is mounted behind a fascia of the vehicle,
- Fig. 2: block diagrams of methods for estimating a direction-of-arrival according to the related art and according to the disclosure,
- Fig. 3: a diagram depicting an azimuth angle error for a method according to the related art and for methods according to the disclosure,
- Fig. 4: a flow diagram illustrating a method for determining a direction-of-arrival for radar waves according to various embodiments,
- Fig. 5: an illustration of a system according to various embodiments, and
- Fig. 6: a computer system with a plurality of computer hardware components configured to carry out steps of a computer implemented method as described herein.

### DETAILED DESCRIPTION

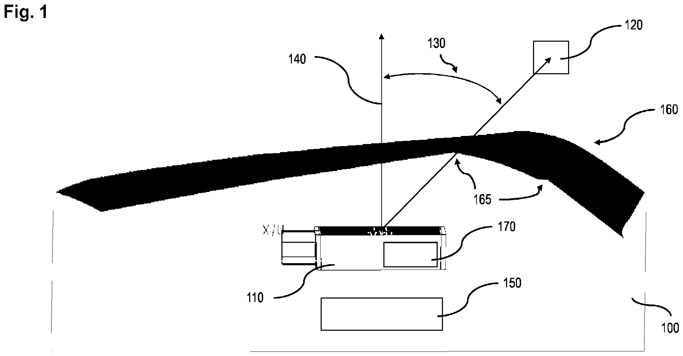

Fig. 1 schematically depicts a vehicle 100 including a radar sensor 110 which is configured to detect an object 120 in the external environment of the vehicle 100. The radar sensor 110 is configured to transmit radar waves and to receive radar waves which are reflected at the object 120. In addition to the range or distance of the object 120 with respect to the radar sensor 110 and the vehicle 100, the radar sensor 110 is also configured to determine a direction-of-arrival 130, i.e. an azimuth angle or an azimuth/elevation angle pair, for the reflected radar waves with respect to a longitudinal axis 140 of the vehicle. Determining the direction-of-arrival for the radar waves with respect to the longitudinal axis of the vehicle 100 is also known as angle finding.

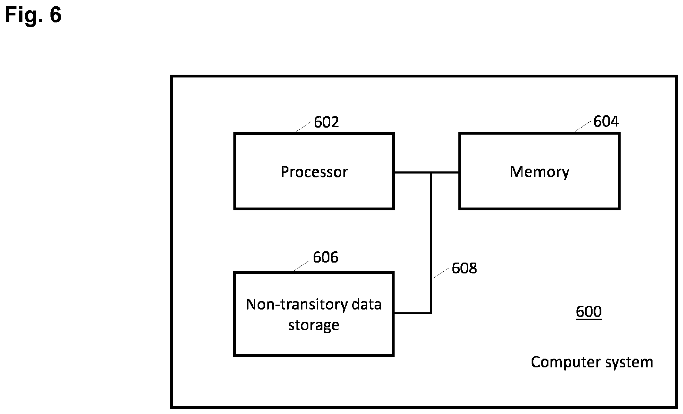

In order to analyze data representing the transmitted and reflected radar waves, the radar sensor 110 is connected to a processing unit 150 which is part of a computer system 600 (see Fig. 6) of the vehicle 100.

Within the vehicle 100, the radar sensor 110 is mounted behind and close to a further vehicle component which is a fascia 160 in the present example. As will be discussed in detail below, the fascia 160 influences the radar waves which are transmitted by the radar sensor and the radar waves which are reflected by the object 120 and received by the radar sensor 110. The influence or impact of the fascia 160 may therefore disturb the result of an angle finding procedure. That is, a large angle error may occur due to the impact of the fascia 160.

So far, integration guidelines are mostly available only for installing the radar sensor 110 in the vehicle 100 behind the fascia 160 in order to mitigate the impact of the fascia 160 on the radar performance and on the angle finding. That is, the impact of the fascia 160 or another vehicle component on the radar performance is usually not considered properly when performing the angle finding procedure.

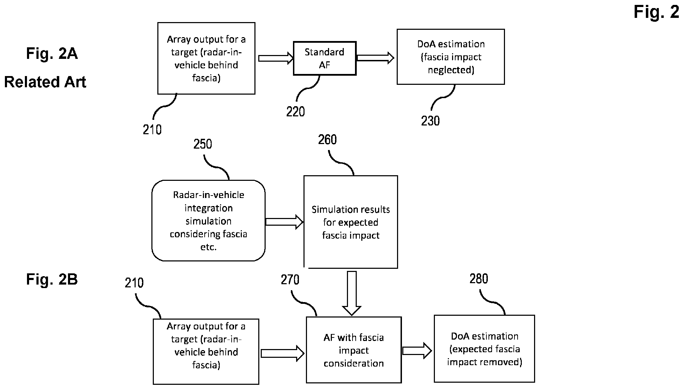

Fig. 2A depicts a method for determining the direction-of-arrival 130 (see Fig. 1) for radar waves or for performing angle finding for the object 120 according to the related art. At 210, an array output for a target, i.e. for the object 120, is provided by the radar sensor 110 being mounted in the vehicle 100 behind the fascia 160. The array output represents the radar waves received by the radar sensor 110 which are reflected by the object 120.

At 220, a standard angle finding procedure is applied to the array output provided at 210. For implementing the standard angle finding procedure, different approaches are known in the related art. For example, Fourier transform techniques may be applied to the radar raw data or array output, and beamforming may be applied on the result for generating a beam vector which provides the direction-of-arrival (DoA) 130 for the radar waves.

As a result of the standard angle finding procedure 220, the direction-of-arrival (DoA) 130 for the radar waves or the azimuth angle with respect to the longitudinal axis of the vehicle 100 (see Fig. 1) is provided at 230. In the method according to the related art, however, the impact of the fascia 160 is neglected. This may lead to large angle errors in an angular range which corresponds to special portions of the fascia 160, e.g. for angles which correspond to creases 165 in the fascia 160 as depicted in Fig. 1.

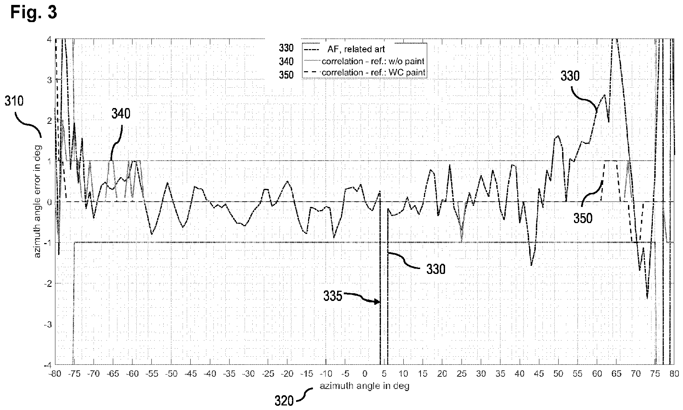

Such problems of the method according to the related art are depicted by curve 330 in Fig. 3 which depicts an azimuth angle error 310 or error of the direction-of-arrival 130 in degrees over the azimuth angle 320 in degrees. As can be recognized from curve 330 provided by the method according to the related are as shown in Fig. 2A, large angle errors are occurring, especially in the range in which the absolute value of the azimuth angle is greater than 50°. Moreover, the impact of the fascia 160 leads to a so-called "angle jump" which is visible at 335 at an azimuth angle of about 5°. The angle jump is a consequence of the creases 165 of the fascia 160 disturbing the radar waves transmitted by the radar sensor 110 and reflected at the object 120.

In order to overcome the drawbacks of the known angle finding procedures as shown by curve 330 in Fig. 3, the method according to the disclosure comprises additional steps which are shown in Fig. 2B and which consider the impact of the fascia 160 on the angle finding procedure.

At 250, the integration of the radar sensor 110 in the vehicle 100 is simulated under the same geometrical conditions as when mounted in the vehicle, e.g. by using the same distances between the radar sensor 110 and the real fascia 160 in three dimensions. Thereafter, the reflection of the radar waves transmitted by the radar sensor 110 at the simulation fascia is detected. Alternatively, the radar waves reflected by the fascia 160 may be simulated purely theoretically based on positioning data for the radar sensor 110 and for the fascia 160 which are provided with respect to a reference position at the vehicle 100.

At 260, the simulation results for the expected impact of the fascia 160 are estimated. Based on the data provided at 250, i.e. based on the measured data or the simulated data, a reference beam vector is estimated representing the impact or influence of the fascia 160. The simulation results estimated at 260 are stored in the memory 170 (see Fig. 1) of the radar sensor 110. Hence, a correction means for primary data received by the radar sensor 110 is directly available and provided together with a radar sensor 110 when the radar sensor 110 is installed in the vehicle100. This reduces the effort for applying the correction means.

The result of the estimating step 260 is further represented by at least one look-up table. Such a look-up table may require a low computational effort e.g. regarding memory and handling.

At 270, the array output for the target or object 120 is received as provided by step 210 from the radar sensor 110 being installed in the vehicle 100 behind the fascia 160 (see Fig. 1), i.e. in the same manner as for step 210 of the method according to the related art. Moreover, a so-called measured beam vector is generated based on the primary data or array output provided at 210. The measured beam vector is determined in a similar manner as for the standard angle finding procedure 120 described above.

Furthermore, an angle finding procedure according to the disclosure is performed at 270 which considers the impact of the fascia 160. That is, the primary data as provided at 210 is modified by the simulation results which are estimated at 260. In detail, a correlation is calculated for the measured beam vector which is determined based on the primary data provided at 210, and for the reference beam vector which represents the simulation results provided at 260. In order to determine the direction-of-arrival (DoA) 130 (see Fig. 1), a maximum or peak of the correlation between the measured and the reference beam vector is determined.

At 280, the result of estimating the direction-of-arrival is provided in which the expected impact of the fascia 160 is removed by the correlation of the measured and referenced beam vectors and by determining the maximum of such a correlation.

As an optional further step, a fractional bin estimation may be applied to the correlation of the measured beam vector and the reference beam vector. The fractional bin estimation is an interpolation step which refines the process of angle finding or determining the direction-of-arrival 130 and therefore improves its accuracy. This approach is generic and not specific for the vehicle component, i.e. for the fascia 160.

In addition, an online calibration of the radar sensor 110 is optionally performed during operation of the vehicle, and the stored result of the estimating step 260 is updated based on the online calibration. Since the geometrical framework or conditions may be slightly different for the real installation of the radar sensor 110 and the fascia 160 within the vehicle 100 on one hand and for the simulation or estimating step 260 on the other hand, the online calibration of the radar sensor 110 provides a refinement for the process of angle finding or determining the direction-of-arrival 130 if the correction means provided by the estimating step 260 is updated based on the online calibration. In addition, the geometrical framework and the performance of the radar sensor 110 may change over time which is taken into account and corrected based on the online calibration.

The curves 340 and 350, as depicted in Fig. 3 by the solid line and the long-dashed line, depict the result of applying the method for determining the direction-of-arrival according to the disclosure. Both curves also depict the respective azimuth angle error over the azimuth angle as mentioned above for curve 330 depicted by the short-dashed line which is based on the method according to the related art. Curve 340 is based on the simulation result 260 which is estimated for a fascia 160 for which no painting has been considered. In contrast, the dashed curve 350 is based on estimating the impact of a fascia via the simulation result 260 for which a so-called "worst case painting" has been considered.

For both curves 340, 350, the angle jump 335 is removed which occurs by applying the standard angle finding according to the related art. In addition, the overall azimuth angle error is strongly reduced for the entire range of azimuth angle. This especially holds true for the angle range in which the absolute value of the azimuth angle is greater than 50°.

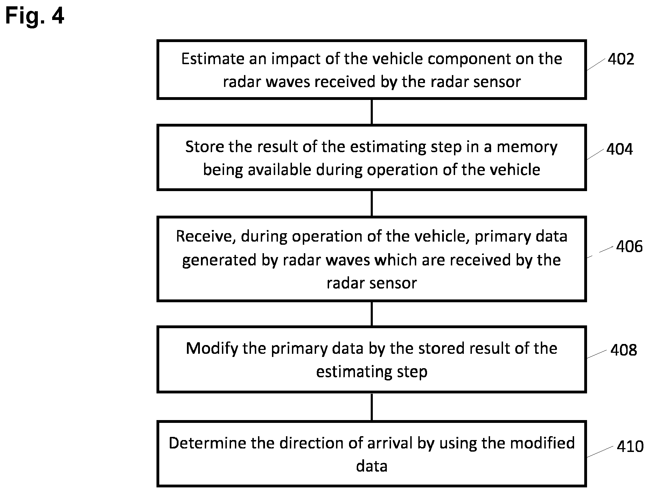

Fig. 4 shows a flow diagram 400 illustrating a method for determining a direction-of-arrival for radar waves.

At 402, an impact of the vehicle component on the radar waves received by the radar sensor may be estimated. At 404, the result of the estimating step may be stored in a memory being available during operation of the vehicle. At 406, primary data generated by radar waves which are received by the radar sensor may be received during operation of the vehicle. At 408, the primary data may be modified by the stored result of the estimating step. At 410, the direction-of-arrival may be determined by using the modified data.

According to various embodiments, estimating the impact of the vehicle component may include: receiving positioning data for the radar sensor and for the vehicle component with respect to a reference position at the vehicle, receiving characteristic data of the vehicle component, and simulating the impact of the vehicle component based on the positioning data and based on the characteristic data.

According to various embodiments, the characteristic data may include data related to a material composition of the vehicle component.

According to an unclaimed example, estimating the impact of the vehicle component may include: receiving positioning data for the radar sensor and for the vehicle component with respect to a reference position at the vehicle, outside the vehicle, disposing the radar sensor relative to a simulation component having the same dimensions and similar material properties as the vehicle component, receiving simulation data which is generated by radar waves transmitted by the radar sensor and reflected by the simulation component, and estimating the impact of the vehicle component based on the simulation data.

According to various embodiments, the result of the estimating step may be represented as a reference beam vector, a measured beam vector may be generated based on the primary data, and modifying the primary data may include correlating the measured beam vector and the reference beam vector.

According to various embodiments, determining the direction-of-arrival by using the modified data may include determining a maximum of the correlation of the measured beam vector and the reference beam vector.

According to various embodiments, a fractional bin estimation may be applied to the correlation of the measured beam vector and the reference beam vector.

According to various embodiments, the result of the estimating step may be stored in a memory of the radar sensor.

According to various embodiments, the result of the estimating step may be represented by at least one look-up table.

According to various embodiments, during operation of the vehicle, an online calibration of the radar sensor may be performed, and the stored result of the estimating step may be updated based on the online calibration.

According to various embodiments, the vehicle component may be a fascia mounted close to a bumper of the vehicle in front of the radar sensor.

Each of the steps 402, 404, 406, 408, 410 and the further steps described above may be performed by computer hardware components.

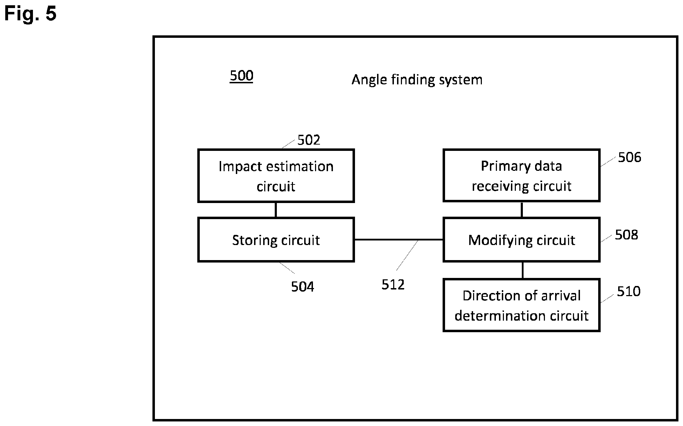

Fig. 5 shows an angle finding system 500 according to various embodiments. The angle finding system 500 may include an impact estimation circuit 502, a storing circuit 504, a primary data receiving circuit 506, a modifying circuit 508, and a direction-of-arrival determination circuit 510.

The impact estimation circuit 502 may be configured to estimate an impact of the vehicle component on the radar waves received by the radar sensor.

The storing circuit 504 may be configured to store the result of the estimating step in a memory being available during operation of the vehicle.

The primary data receiving circuit 506 may be configured to receive, during operation of the vehicle, primary data generated by radar waves which are received by the radar sensor.

The modifying circuit 508 may be configured to modify the primary data by the stored result of the estimating step which has been estimated by the impact estimation circuit 502 and stored by the storing circuit 504.

The direction-of-arrival determination circuit 510 may be configured to determine the direction-of-arrival by using the modified data.

The impact estimation circuit 502, the storing circuit 504, the primary data receiving circuit 506, the modifying circuit 508, and the direction-of-arrival determination circuit 510 may be coupled to each other, e.g. via an electrical connection 512, such as e.g. a cable or a computer bus or via any other suitable electrical connection to exchange electrical signals.

A "circuit" may be understood as any kind of a logic implementing entity, which may be special purpose circuitry or a processor executing a program stored in a memory, firmware, or any combination thereof.

Fig. 6 shows a computer system 600 with a plurality of computer hardware components configured to carry out steps of a computer implemented method for predicting respective trajectories of a plurality of road users according to various embodiments. The computer system 600 may include a processor 602, a memory 604, and a non-transitory data storage 606.

The processor 602 may carry out instructions provided in the memory 604. The non-transitory data storage 606 may store a computer program, including the instructions that may be transferred to the memory 604 and then executed by the processor 602.

The processor 602, the memory 604, and the non-transitory data storage 606 may be coupled with each other, e.g. via an electrical connection 608, such as e.g. a cable or a computer bus or via any other suitable electrical connection to exchange electrical signals.

As such, the processor 602, the memory 604 and the non-transitory data storage 606 may represent the impact estimation circuit 502, the storing circuit 504, the primary data receiving circuit 506, the modifying circuit 508, and the direction-of-arrival determination circuit 510, as described above.

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the angle finding system 500 and/or for the computer system 600.

### Reference numeral list

- 100: vehicle
- 110: radar sensor
- 120: object
- 130: azimuth angle, direction-of-arrival (DoA)
- 140: lateral axis of the vehicle
- 150: processing unit
- 160: fascia
- 165: crease of the fascia
- 170: memory
- 210 - 230: steps of a method according to the related art
- 250 - 280: steps of a method according to the disclosure
- 310: azimuth angle error
- 320: azimuth angle
- 330: azimuth angle error for the method according to the related art
- 335: angle jump
- 340: azimuth angle error for the method according to the disclosure for a fascia without paint
- 350: azimuth angle error for the method according to the disclosure for a fascia with worst case paint

- 400: flow diagram illustrating a method for determining a direction-of-arrival for radar waves
- 402: step of estimating an impact of the vehicle component on the radar waves received by the radar sensor
- 404: step of storing the result of the estimating step in a memory being available during operation of the vehicle
- 406: step of receiving, during operation of the vehicle, primary data generated by radar waves which are received by the radar sensor
- 408: step of modifying the primary data by the stored result of the estimating step
- 410: step of determining the direction-of-arrival by using the modified data

- 500: angle finding system
- 502: impact estimation circuit
- 504: storing circuit
- 506: primary data receiving circuit
- 508: modifying circuit
- 510: direction-of-arrival determination circuit
- 512: connection

- 600: computer system according to various embodiments
- 602: processor
- 604: memory
- 606: non-transitory data storage
- 608: connection

## Claims

1. Computer implemented method for determining a direction-of-arrival (130) for radar waves which are transmitted by a radar sensor (110) mounted at a vehicle (100), wherein the radar waves are reflected at an object (120) in the external environment of the vehicle (100) and received by the radar sensor (110), wherein a vehicle component (160) is mounted in a field of view of the radar sensor (110),
the method comprising the following steps performed by a processing unit (150) of the vehicle (100):
estimating an impact of the vehicle component (160) on the radar waves received by the radar sensor (110),
storing the result of the estimating step in a memory (170) being available during operation of the vehicle (100),
receiving, during operation of the vehicle (100), primary data generated by radar waves which are received by the radar sensor (110),
modifying the primary data by the stored result of the estimating step, and
determining the direction-of-arrival (130) by using the modified data, **characterized in that**
estimating the impact of the vehicle component (160) includes:
receiving positioning data for the radar sensor (110) and for the vehicle component (160) with respect to a reference position at the vehicle (100),
receiving characteristic data of the vehicle component (160), and
simulating the impact of the vehicle component (160) based on the positioning data and based on the characteristic data.

2. Method according to claim 1, wherein
the characteristic data includes data related to a material composition of the vehicle component (160).

3. Method according to any one of claims 1 or 2, wherein
the result of the estimating step is represented as a reference beam vector,
a measured beam vector is generated based on the primary data, and
modifying the primary data includes correlating the measured beam vector and the reference beam vector.

4. Method according to claim 3, wherein
determining the direction-of-arrival (130) by using the modified data includes determining a maximum of the correlation of the measured beam vector and the reference beam vector.

5. Method according to claim 3 or 4, wherein
a fractional bin estimation is applied to the correlation of the measured beam vector and the reference beam vector.

6. Method according to any one of claims 1 to 5, wherein
the result of the estimating step is stored in a memory (170) of the radar sensor (110).

7. Method according to any one of claims 1 to 6, wherein
the result of the estimating step is represented by at least one look-up table.

8. Method according to any one of claims 1 to 7, wherein
during operation of the vehicle (100), an online calibration of the radar sensor (110) is performed, and
the stored result of the estimating step is updated based on the online calibration.

9. Method according to any one of claims 1 to 8, wherein
the vehicle component (160) is a fascia mounted close to a bumper of the vehicle (100) in front of the radar sensor (110).

10. Computer system (600), the computer system being configured to carry out the computer implemented method of at least one of claims 1 to 9.

11. Vehicle (100) including a radar sensor (110) and the computer system (600) according to claim 10.

12. Vehicle (100) according to claim 11, wherein
the radar sensor (110) includes a memory (170) in which the result of the estimating step is stored.

13. Non-transitory computer readable medium comprising instructions which, when the instructions are executed by the computer system of claim 10, carry out the computer implemented method of at least one of claims 1 to 9.

## Patentansprüche

1. Computerimplementiertes Verfahren zum Ermitteln einer Einfallsrichtung (130) für Radarwellen, die von einem Radarsensor (110) gesendet werden, der an einem Fahrzeug (100) angebracht ist, wobei die Radarwellen an einem Objekt (120) in der äußeren Umgebung des Fahrzeugs (100) reflektiert werden und von dem Radarsensor (110) empfangen werden, wobei eine Fahrzeugkomponente (160) in einem Gesichtsfeld des Radarsensors (110) angebracht ist,
wobei das Verfahren die folgenden Schritte umfasst, die von einer Verarbeitungseinheit (150) des Fahrzeugs (100) ausgeführt werden:
Schätzen einer Auswirkung der Fahrzeugkomponente (160) auf die Radarwellen, die von dem Radarsensor (110) empfangen werden,
Speichern des Ergebnisses des Schätzschritts in einem Speicher (170), der während des Betriebs des Fahrzeugs (100) verfügbar ist,
Empfangen, während des Betriebs des Fahrzeugs (100), von Primärdaten, die durch Radarwellen erzeugt werden, die von dem Radarsensor (110) empfangen werden,
Modifizieren der Primärdaten durch das gespeicherte Ergebnis des Schätzschritts, und
Ermitteln der Einfallsrichtung (130) durch die Verwendung der modifizierten Daten,
**dadurch gekennzeichnet, dass**
das Schätzen der Auswirkung der Fahrzeugkomponente (160) umfasst:
Empfangen von Positionierungsdaten für den Radarsensor (110) und für die Fahrzeugkomponente (160) bezogen auf eine Referenzposition an dem Fahrzeug (100),
Empfangen charakteristischer Daten der Fahrzeugkomponente (160) und
Simulieren der Auswirkung der Fahrzeugkomponente (160) basierend auf den Positionierungsdaten und basierend auf den charakteristischen Daten.

2. Verfahren nach Anspruch 1, wobei
die charakteristischen Daten auf eine Materialzusammensetzung der Fahrzeugkomponente (160) bezogene Daten umfassen.

3. Verfahren nach Anspruch 1 oder 2, wobei
das Ergebnis des Schätzschritts als ein Referenz-Strahlvektor dargestellt wird,
ein gemessener Strahlvektor basierend auf den Primärdaten erzeugt wird und
das Modifizieren der Primärdaten umfasst, dass der gemessene Strahlvektor und der Referenz-Strahlvektor korreliert werden.

4. Verfahren nach Anspruch 3, wobei
das Ermitteln der Einfallsrichtung (130) durch die Verwendung der modifizierten Daten umfasst, dass ein Maximum der Korrelation des gemessenen Strahlvektors und des Referenz-Strahlvektors ermittelt wird.

5. Verfahren nach Anspruch 3 oder 4, wobei
eine Schätzung mit fraktionalen Bereichen auf die Korrelation des gemessenen Strahlvektors und des Referenz-Strahlvektors angewendet wird.

6. Verfahren nach einem der Ansprüche 1 bis 5, wobei
das Ergebnis des Schätzschritts in einem Speicher (170) des Radarsensors (110) gespeichert wird.

7. Verfahren nach einem der Ansprüche 1 bis 6, wobei
das Ergebnis des Schätzschritts durch mindestens eine Nachschlagetabelle dargestellt wird.

8. Verfahren nach einem der Ansprüche 1 bis 7, wobei
während des Betriebs des Fahrzeugs (100) eine Online-Kalibrierung des Radarsensors (110) ausgeführt wird und
das gespeicherte Ergebnis des Schätzschritts basierend auf der Online-Kalibrierung aktualisiert wird.

9. Verfahren nach einem der Ansprüche 1 bis 8, wobei
die Fahrzeugkomponente (160) ein Schild ist, das in der Nähe einer Stoßstange des Fahrzeugs (100) vor dem Radarsensor (110) angebracht ist.

10. Computersystem (600), wobei das Computersystem ausgebildet ist, das computerimplementierte Verfahren nach mindestens einem der Ansprüche 1 bis 9 auszuführen.

11. Fahrzeug (100), das einen Radarsensor (110) und das Computersystem (600) nach Anspruch 10 umfasst.

12. Fahrzeug (100) nach Anspruch 11, wobei
der Radarsensor (110) einen Speicher (170) umfasst, in welchem das Ergebnis des Schätzschritts gespeichert ist.

13. Nichtflüchtiges computerlesbares Medium, das Anweisungen umfasst, die dann, wenn die Anweisungen durch das Computersystem nach Anspruch 10 ausgeführt werden, das computerimplementierte Verfahren nach zumindest einem der Ansprüche 1 bis 9 ausführen.

## Revendications

1. Procédé mis en œuvre par ordinateur pour déterminer une direction d'arrivée (130) d'ondes radar qui sont émises par un capteur radar (110) monté sur un véhicule (100), dans lequel les ondes radar sont réfléchies par un objet (120) dans l'environnement extérieur du véhicule (100) et reçues par le capteur radar (110), dans lequel un composant de véhicule (160) est monté dans un champ de vision du capteur radar (110),
le procédé comprenant les étapes suivantes exécutées par une unité de traitement (150) du véhicule (100) et consistant à :
estimer un impact du composant de véhicule (160) sur les ondes radar reçues par le capteur radar (110),
stocker le résultat de l'étape d'estimation dans une mémoire (170) disponible pendant le fonctionnement du véhicule (100),
recevoir, pendant le fonctionnement du véhicule (100), des données primaires générées par des ondes radar qui sont reçues par le capteur radar (110),
modifier les données primaires en fonction du résultat stocké de l'étape d'estimation, et
déterminer la direction d'arrivée (130) en utilisant les données modifiées,
**caractérisé en ce que**
estimer l'impact du composant de véhicule (160) inclut les opérations consistant à :
recevoir des données de positionnement pour le capteur radar (110) et pour le composant de véhicule (160) par rapport à une position de référence sur le véhicule (100),
recevoir des données caractéristiques du composant de véhicule (160), et
simuler l'impact du composant de véhicule (160) sur la base des données de positionnement et sur la base des données caractéristiques.

2. Procédé selon la revendication 1, dans lequel
les données caractéristiques incluent des données liées à une composition matérielle du composant de véhicule (160).

3. Procédé selon l'une quelconque des revendications 1 ou 2, dans lequel
le résultat de l'étape d'estimation est représenté sous la forme d'un vecteur de faisceau de référence,
un vecteur de faisceau mesuré est généré sur la base des données primaires, et
modifier les données primaires consiste à corréler le vecteur de faisceau mesuré et le vecteur de faisceau de référence.

4. Procédé selon la revendication 3, dans lequel
déterminer la direction d'arrivée (130) en utilisant les données modifiées consiste à déterminer un maximum de la corrélation du vecteur de faisceau mesuré et du vecteur de faisceau de référence.

5. Procédé selon la revendication 3 ou 4, dans lequel
une estimation par bin fractionnaire est appliquée à la corrélation entre le vecteur de faisceau mesuré et le vecteur de faisceau de référence.

6. Procédé selon l'une quelconque des revendications 1 à 5, dans lequel
le résultat de l'étape d'estimation est stocké dans une mémoire (170) du capteur radar (110).

7. Procédé selon l'une quelconque des revendications 1 à 6, dans lequel
le résultat de l'étape d'estimation est représenté par au moins une table de consultation.

8. Procédé selon l'une quelconque des revendications 1 à 7, dans lequel
pendant le fonctionnement du véhicule (100), un étalonnage en ligne du capteur radar (110) est effectué, et
le résultat stocké de l'étape d'estimation est mis à jour sur la base de l'étalonnage en ligne.

9. Procédé selon l'une quelconque des revendications 1 à 8, dans lequel
le composant de véhicule (160) est une calandre montée à proximité d'un pare-chocs du véhicule (100) devant le capteur radar (110).

10. Système informatique (600), le système informatique étant configuré pour réaliser le procédé mis en œuvre par ordinateur selon au moins l'une des revendications 1 à 9.

11. Véhicule (100) incluant un capteur radar (110) et le système informatique (600) selon la revendication 10.

12. Véhicule (100) selon la revendication 11, dans lequel
le capteur radar (110) inclut une mémoire (170) dans laquelle le résultat de l'étape d'estimation est stocké.

13. Support non transitoire lisible par ordinateur comprenant des instructions qui, lorsqu'elles sont exécutées par le système informatique selon la revendication 10, réalisent le procédé mis en œuvre par ordinateur selon au moins l'une des revendications 1 à 9.
